# EUROPÄISCHE PATENTSCHRIFT

(11) **EP 2 326 525 B1**
(45) Veröffentlichungstag und Bekanntmachung des Hinweises auf die Patenterteilung: **30.07.2014**
(21) Anmeldenummer: 09778695.8
(22) Anmeldetag: 24.09.2009
(51) Int. Cl.: B60K 11/08

(54) **KÜHLERGRILLANORDNUNG**
RADIATOR GRILL ARRANGEMENT
GRILLE DE RADIATEUR

(30) Priorität: 27.09.2008 DE 102008049228
(43) Veröffentlichungstag der Anmeldung: 01.06.2011
(73) Patentinhaber: Daimler AG, 70327 Stuttgart (DE)
(72) Erfinder: BOUTARIS, Konstantin, 72119 Ammerbuch (DE); FERRERA, Renato, 71120 Grafenau (DE); KONERMANN, Martin, 70619 Stuttgart (DE)
(74) Vertreter: JENSEN & SON
(86) Internationale Anmeldenummer: PCT/EP2009/006897
(87) Internationale Veröffentlichungsnummer: WO 2010/034489

(56) Entgegenhaltungen:
- EP-A- 0 605 325
- DE-A-102006 016 880
- FR-A- 2 404 557
- GB-A- 240 292
- GB-A- 2 131 150
- US-A- 1 643 192
- US-A- 3 115 223

## Beschreibung

Die Erfindung betrifft eine Kühlergrillanordnung für einen Kraftwagenbug eines Kraftwagens.

Derartige Kühlergrillanordnungen mit verschließbaren Luftdurchtrittsöffnungen sind aus dem Stand der Technik bekannt. Die DE 10 2004 048 038 A1 offenbart eine verschließbare Kraftfahrzeug-Kühlergrillanordnung, bei welcher ein Verschließen der Luftdurchtrittsöffnungen im Kühlergrill durch eine verschiebbare Stegelementstruktur realisiert wird. Solche Vorrichtungen benötigen relativ viel Bauraum, um die translatorische Bewegung der Stegelemente aus einer Verschluss- in eine Öffnungsposition zu ermöglichen. Dies ist in modernen, ohnehin schon beengten Motorräumen nicht wünschenswert.

Die GB 2 131 150 A kann als nächst-liegender Stand der Technik angesehen werden. Sie offenbart einen Kühlergrill für ein Kraftfahrzeug mit durch Klappenelemente verschließbaren Luftdurchtrittsöffnungen. Sie zeigt jedoch nicht, dass die Klappenelemente durch unmittelbar gegenüberliegende Stege begrenzte Luftdurchtrittsöffnungen verschließt.

Der vorliegenden Erfindung liegt die Aufgabe zugrunde, eine Kühlergrillanordnung für einen Kraftwagenbug eines Kraftwagens der eingangs genannten Art derart weiterzuentwickeln, dass ein Öffnen und Verschließen von Luftdurchtrittsöffnungen im Kühlergrill mit geringem Bauraumbedarf und einfacher Kinematik ermöglicht wird.

Diese Aufgabe wird durch eine Kühlergrillanordnung mit den Merkmalen des Patentanspruchs 1 gelöst.

Eine Kühlergrillanordnung für einen Kraftwagenbug eines Kraftwagens nach der Erfindung besteht aus einem Kühlergrill, welcher eine Mehrzahl von Luftdurchtrittsöffnungen umfasst, sowie wenigstens einem Klappenelement einer Klappenanordnung, mittels welchem eine oder mehrere Luftdurchtrittsöffnungen zumindest im Wesentlichen verschließbar ist bzw. sind. Erfindungsgemäß ist vorgesehen, dass das wenigstens eine Klappenelement schwenkbar um eine zugehörige Klappenachse gelagert ist. Ein Verschwenken der Klappenelemente, um so einen Öffnungszustand der Luftdurchtrittsöffnungen zu beeinflussen, zeichnet sich durch einen geringen Bauraumbedarf und durch einfache Kinematik aus. Die erfindungsgemäße Kühlergrillanordnung ist somit sowohl platzsparend als auch kostengünstig zu realisieren und aufgrund der einfachen Bewegungskinematik der Klappenelemente zudem wartungsarm.

Nach der Erfindung ist das wenigstens eine Klappenelement zwischen einer Verschlussstellung, in welcher es wenigstens eine zugeordnete Luftdurchtrittsöffnung verschließt, und einer Öffnungsstellung, in welcher es die wenigstens eine zugeordnete Luftdurchtrittsöffnung vollständig freigibt, schwenkbar. Durch eine solche Anordnung wird also eine Regelung des den Kühlergrill durchströmenden Luftstromes möglich. Dieser Luftstrom dient der Kühlung des Motorraumes und von darin angeordneten Komponenten. In bestimmten Betriebszuständen kann ein teilweises Verschließen der Kühlergrillanordnung vorteilhaft sein, da durch den Fahrtwind mehr Luft in den Motorraum gefördert wird, als eigentlich für die Kühlung benötigt. Durch ein teilweises oder vollständiges Verschließen der Kühlergrillanordnung wird in solchen Fahrzuständen die Luftförderung in den Motorraum auf die benötigte Luft beschränkt und dadurch gleichzeitig der Widerstandsbeiwert c_{w} des Kraftwagens verbessert. Dadurch kommt es zu zusätzlichen Kraftstoffeinsparungen. Auch die Abgabe von Schall aus dem Motorraum wird bei geschlossenen Kühlergrillanordnungen reduziert.

In einer bevorzugten Ausführungsform greift in der Verschlussstellung des wenigstens einen beweglichen Klappenelements eine Kante desselben in eine Nut eines zugeordneten, wenigstens eine Luftdurchtrittsöffnung begrenzenden Steges oder dergleichen des Kühlergrills ein. Damit wird zum einen das Klappenelement in seiner Verschlussstellung zusätzlich mechanisch fixiert, zum anderen wird durch die Zusammenwirkung zwischen Kante und Nut ein besonders dichter Verschluss der Luftdurchtrittsöffnung erzielt.

Um die Dichtungswirkung der Klappenelemente in ihrer Verschlussstellung weiter zu verbessern, ist es in einer weiteren Ausführungsform vorgesehen, an der Kante des Klappenelementes und/oder an der Nut, in welche die genannte Kante eingreift, ein Dichtungselement anzubringen. Dies kann beispielsweise in Form einer Dichtlippe aus Gummi oder dergleichen realisiert werden. Dies verbessert die Dichtwirkung und reduziert weiter die Schallabgabe aus dem Motorraum. In einer besonders bevorzugten Ausführungsform bilden die Kante und die Nut im Verschlusszustand der Klappenelemente eine Labyrinthdichtung aus. Hierdurch wird die Dichtwirkung weiter verbessert.

Ein weiterer Aspekt der Erfindung betrifft die Ausformung des wenigstens einen Klappenelementes. Dies umfasst bevorzugt eine Verschlussfläche, welche in der Verschlussstellung die zugeordnete Luftdurchtrittsöffnung abdeckt, sowie ein Basisteil. Das Basisteil kann dabei schmaler und leichter ausgebildet sein als der Bereich der Verschlussfläche, so dass Gewicht und weiterer Bauraum eingespart wird. Erfindungsgemäß die Drehachse des wenigstens einen Klappenelementes im Bereich des genannten Basisteils angeordnet.

Nach der Erfindung ist ein Betätigungselement vorgesehen, welches mit einem Endbereich des wenigstens einen Klappenelements gekoppelt ist wobei, das Betätigungselement mit einem Endbereich des Basisteils gekoppelt ist. Damit ergibt sich eine besonders einfache Bewegungskinematik des Klappenelementes. Eine Bewegung des Betätigungselementes wird über den Endbereich des Basisteils auf das Klappenelement übertragen, welches sich hebelartig um seine Drehachse drehen kann und dadurch den Verschlusszustand der zugeordneten Luftdurchtrittsöffnung ändert. Durch die Abstände zwischen dem Endbereich und der Drehachse einerseits und der Drehachse und der Verschlussfläche andererseits kann eingestellt werden, in welchem Verhältnis Bewegungen des Betätigungselementes auf Bewegungen des Klappenelementes übertragen werden. Insbesondere ein kurzer Abstand von Endbereich zu Drehachse in Verbindung mit einem langen Abstand von Drehachse zu Verschlussfläche ermöglicht eine sehr bauraumsparende Realisierung einer derartigen Kühlergrillanordnung. Bei einem solchen Abstandsverhältnis zwischen den genannten Punkten genügen sehr kleine Bewegungen des Betätigungselementes, um die Verschlussfläche über einen weiten Weg zu verschwenken. Zusätzlich ermöglicht eine solche Anordnung ein schnelles Verstellen der Klappenelemente.

Das Betätigungselement ist in einer weiteren bevorzugten Ausführungsform der Erfindung in Form einer Schubstange oder Torsionsstange ausgebildet. Das Betätigungselement selbst benötigt für seine Bewegung in derartigen Ausführungsformen nur sehr wenig Bauraum, da bei der Ausführung in Form einer Schubstange nur eine geringe translatorische Bewegung notwendig ist, um die gewünschte Bewegung der Klappenelemente zu erzielen. Noch bauraumsparender ist die Ausführung als Torsionsstange, da das Betätigungselement in dieser Form lediglich innere Bewegungen ausführen muss, ohne sich im Raum relativ zu anderen Komponenten, welche im Motorraum angeordnet sind, zu bewegen. Die Übertragung der Bewegung des Betätigungselementes auf die Klappenelemente erfolgt dabei bevorzugt über eine Verzahnung, eine Schneckenverzahnung oder einen Reibschluss. Die Art der Koppelung zwischen Betätigungselement und Klappenelementen ist dabei im Wesentlichen abhängig von der Art der Bewegung des Betätigungselementes. Eine Schubstange könnte beispielsweise in Form einer Zahnstange ausgeführt werden, welche mit einer komplementären Verzahnung der Klappenelemente kämmt. Im Falle einer Torsionsstange bietet es sich an, eine Schneckenverzahnung einzusetzen, so dass ein Verdrehen der Torsionsstange über eine kämmende Verzahnung der Klappenelemente in die entsprechende Bewegung der Klappenelemente umgesetzt werden kann.

Zum Antreiben des Betätigungselementes ist bevorzugterweise ein elektrischer oder pneumatischer Antrieb vorgesehen. Dieser kann gegebenenfalls mit einer Steuereinrichtung verbunden werden, so dass sich die Stellung der Klappenelemente automatisch in Abhängigkeit einer Motorraumtemperatur, Motortemperatur oder auch einer Fahrtgeschwindigkeit anpassen lässt.

In einer weiteren besonders bevorzugten Ausführungsform ist weiterhin jeder Luftdurchtrittsöffnung genau ein bewegliches Klappenelement zugeordnet. Solche Klappenelemente können gegebenenfalls auch einer separaten Steuerung unterliegen, so dass in bestimmten Fahrzuständen in Abhängigkeit vom Kühlluftbedarf und der Fahrtgeschwindigkeit jeweils nur ein Teil der Luftdurchtrittsöffnungen verschlossen bzw. geöffnet wird. Dadurch ist eine weitere Optimierung des Kühlluftstromes in Verbindung mit einer Optimierung des Luftwiderstandsbeiwertes c_{w} des Kraftwagens und damit des Kraftstoffverbrauchs möglich.

Im Folgenden soll die Erfindung und ihre Ausführungsformen anhand der Zeichnung näher erläutert werden. Hierbei zeigen:
- Fig. 1: eine schematische Schnittdarstellung durch eine Ausführungsform einer erfindungsgemäßen Kühlergrillanordnung,
- Fig. 2: eine schematische Schnittdarstellung durch eine alternative Ausführungsform einer erfindungsgemäßen Kühlergrillanordnung, und
- Fig. 3: eine Frontansicht einer Ausführungsform einer erfindungsgemäßen Kühlergrillanordnung.

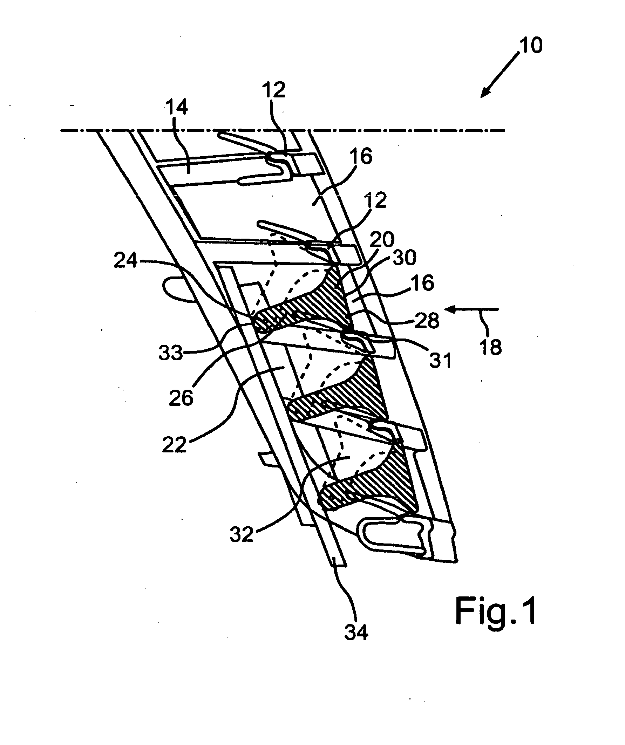

Die in Fig. 1 gezeigte, im Ganzen mit 10 bezeichnete Kühlergrillanordnung umfasst eine Mehrzahl von Lamellen 12, die der Übersichtlichkeit halber nicht alle bezeichnet sind. Die Lamellen 12 sind auf einer feststehenden Stegstruktur 14 montiert und erstrecken sich in Fahrzeugquerrichtung. Zwischen den Lamellen 12 sind Luftdurchtrittsöffnungen 16 ausgebildet, durch die Fahrtwind in Richtung des Pfeiles 18 von der Fahrzeugfront her in den Motorraum eintreten kann. Um die Luftdurchtrittsöffnungen 16 bei geringem Kühlluftbedarf oder im Standzustand des Fahrzeugs mit abgestelltem Motor verschließen zu können, sind schwenkbare Klappen 20 vorgesehen. Diese sind an seitlichen Längsrippen 22 der Stegstruktur 14 um eine Drehachse 24 schwenkbar angelenkt. Die Klappen 20 umfassen ein Basisteil 26, welches die Drehachse 24 trägt und ein Kopfteil 28, an dem eine Verschlussfläche 30 ausgebildet ist.

Die mit soliden Umrisslinien dargestellten Klappen 20 befinden sich in Fig. 1 in ihrem Verschlusszustand, in welchem sie die Luftdurchtrittsöffnungen 16 verschließen. Um die Verschlusswirkung der Klappen 20 weiter zu verbessern, kann eine Vorderkante 31 der Klappen 20 im Verschlusszustand der Klappen 20 in eine zugeordnete Nut der Stege 12 eingreifen. Zusätzlich können dabei entweder im Bereich der Nut oder im Bereich der Vorderkanten 31 Dichtungselemente an Klappen 20 oder Stegen 12 angeordnet sein, um ein Durchströmen von Luft durch die geschlossenen Klappen 20 möglichst effizient zu verhindern. Durch ein Eintauchen der Vorderkanten 31 der Klappen 20 in zugeordnete Nuten der Stege 12 ergibt sich so eine Dichtung in Form einer Labyrinthdichtung, welche besonders effizient den Luftdurchtritt durch die Kühlergrillanordnung 10' mit verschlossenen Klappen 20 verhindert. Daneben ist mit gestrichelter Umrisslinie der Öffnungszustand 32 der Klappen 20 dargestellt, in welchem sie nach oben hin verschwenkt sind, wodurch die Verschlussfläche 30 die Luftdurchtrittsöffnungen 16 freigibt.

Um die Klappen 20 zwischen ihrem Öffnungs- und Verschlusszustand zu bewegen, ist eine Betätigungsvorrichtung in Form einer Schubstange 34 vorgesehen. Diese tritt mit dem Endbereich 33 des Basisteils 26 der Klappen 20 in Wirkverbindung, so dass bei einem Verschieben der Schubstange 34 die Klappen 20 um die Drehachse 24 rotieren können und so zwischen ihrem Öffnungs- und Schließzustand verstellt werden können.

Neben einer Regulierung der in den Motorraum einströmenden Luftmenge kann durch eine derartige Klappenanordnung bei geringem Kühlluftbedarf der Luftwiderstandsbeiwert c_{w} des zugehörigen Kraftwagens durch Schließen der Klappen gesenkt werden.

Gegebenfalls lassen sich einzelne Klappen 20 einzeln ansteuerbar ausführen, so dass lediglich ein Teil der Durchströmfläche der Kühlergrillanordnung bei entsprechendem Luftbedarf geöffnet werden kann. Dies kann besonders sinnvoll bei hohen Fahrtgeschwindigkeiten sein, da durch die hohe Geschwindigkeit ein hoher Staudruck herrscht und lediglich eine geringe Luftdurchtrittsfläche durch die Kühlergrillarfordnung benötigt wird, um den Motor und den Motorraum mit Kühlluft zu versorgen. Damit wird es möglich, einen Großteil der Klappen 20 geschlossen zu halten, was den Widerstandsbeiwert c_{w} senkt. Dies ist gerade bei hohen Fahrtgeschwindigkeiten bedeutsam, da so beträchtliche Kraftstoffmengen eingespart werden können.

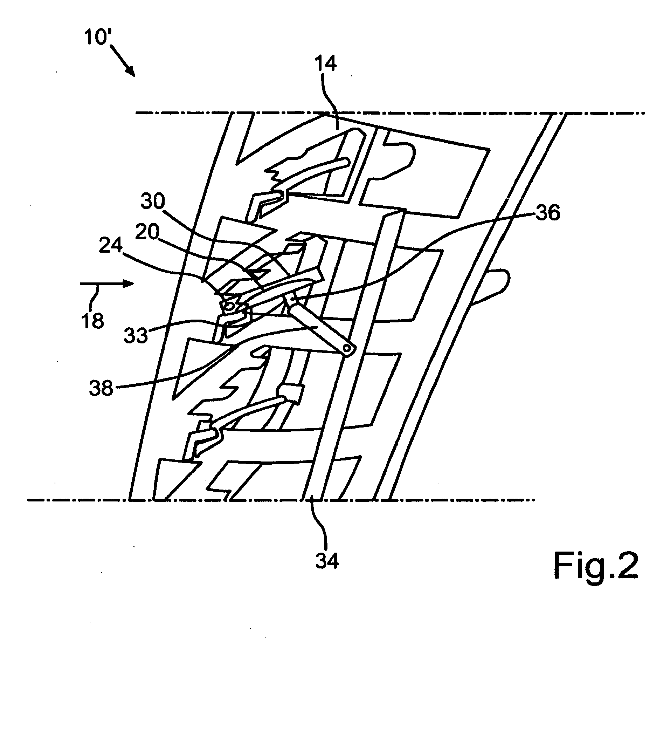

Fig. 2 zeigt eine alternative Ausführungsform einer Kühlergrillanordnung 10', bei welcher die Koppelung zwischen Schubstange 34 und Klappen 20 nicht, wie in Fig. 1 gezeigt, unmittelbar, sondern mittelbar über eine sowohl an der Schubstange 34 als auch an einem Steg 36 der Klappe 20 beweglich angelenkten Gelenkstange 38 erfolgt. Solche Klappenanordnungen lassen sich noch bauraumsparender realisieren, bzw. können über die Gestaltung der Gelenkstange 38 an geometrische Anforderungen im Einbaubereich besser angepasst werden, so dass gegebenenfalls keine anderen konstruktiven Maßnahmen ergriffen werden müssen, um Raum für die Schubstange 34 zu schaffen. Die Klappen 20 selbst weisen in der gezeigten Ausführungsform keine ausgeprägte Trennung in Verschlussfläche 30 und Basisteil 22 auf. Sie bestehen vielmehr aus einem flächig ausgebildeten Grundkörper, welcher lediglich einen kurzen Steg 36 anstelle des Basisteils 26 umfasst. Funktional entsprechen die Klappen 20 jedoch denen, die in Fig. 1 gezeigt sind. Weitere wesentliche Unterschiede zur in Fig. 1 gezeigten Kühlergrillanordnung 10 bestehen nicht. Zum Antrieb der Schubstange 34 kann ein elektrischer oder pneumatischer Antrieb dienen, wobei bei pneumatischen Antrieben eine Verbindung mit bereits existierenden Pneumatiksystemen ohne Weiteres möglich ist.

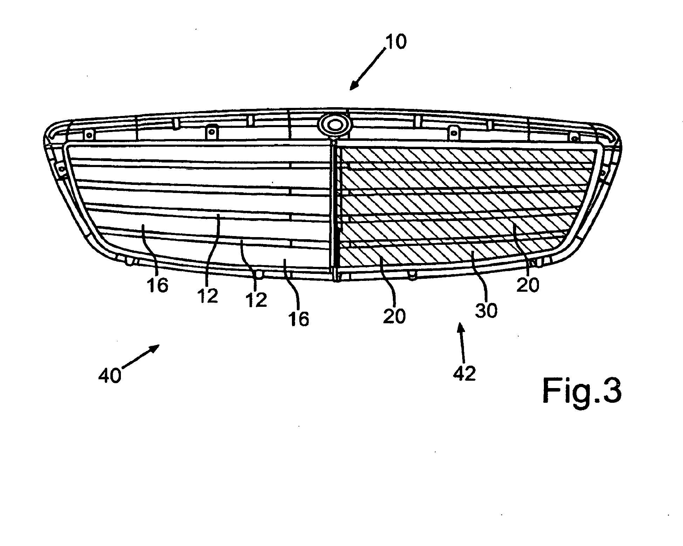

Fig. 3 zeigt schließlich eine Frontansicht einer erfindungsgemäßen Kühlergrillanordnung 10, wobei die linke Hälfte 40 mit geöffneten Luftdurchtrittsöffnungen 16, also mit Klappen 20 in ihrer Öffnungsstellung und die rechte Hälfte 42 mit geschlossenen Luftdurchtrittsöffnungen 16, also den Klappen 20 in ihrer Verschlussstellung dargestellt ist. Die rechts gezeigte Verschlussstellung kann insbesondere dann automatisch eingestellt werden, wenn das Fahrzeug abgestellt und der Motor ausgeschaltet wird. Durch die entsprechende Gestaltung der Verschlussflächen 30, die in diesem Zustand nach außen weisen, kann eine ästhetisch ansprechende Anmutung des abgestellten Fahrzeuges erzielt werden.

## Patentansprüche

1. Kühlergrillanordnung (10, 10') für einen Kraftwagenbug eines Kraftwagens mit einem Kühlergrill, welcher eine Mehrzahl von Luftdurchtrittsöffnungen (16) umfasst, und mit wenigstens einem Klappenelement (20) einer Klappenanordnung, mittels welchem eine oder mehrere Luftdurchtrittsöffnungen (16) zumindest im Wesentlichen verschließbar ist bzw. sind, wobei das wenigstens eine Klappenelement (20) schwenkbar um eine zugehörige Klappenachse (24) gelagert und zwischen einer Verschlussstellung, in welcher es wenigstens eine zugeordnete, durch unmittelbar gegenüberliegende Stege (12) begrenzte Luftdurchtrittsöffnung (16) verschließt, und einer Öffnungsstellung, in welcher es die wenigstens eine zugeordnete Luftdurchtrittsöffnung (16) vollständig freigibt, schwenkbar ist,
wobei
das wenigstens eine Klappenelement (20) eine Verschlussfläche (30), welche in der Verschlussstellung die zugeordnete Luftdurchtrittsöffnung (16) abdeckt, und ein Basisteil umfasst, wobei die Drehachse (24) des wenigstens einen Klappenelements im Bereich des Basisteils (26) angeordnet und ein Betätigungselement (34) vorgesehen ist, welches mit einem Endbereich (33) des wenigstens einen Klappenelementes (26) gekoppelt ist, wobei das Betätigungselement (34) mit einem Endbereich des Basisteils (26) gekoppelt ist..

2. Kühlergrillanordnung (10, 10') nach Anspruch 1,
**dadurch gekennzeichnet, dass**
das Betätigungselement (34) als Schubstange oder Torsionsstange ausgebildet ist.

3. Kühlergrillanordnung (10, 10') nach Anspruch 1,
**dadurch gekennzeichnet, dass**
das Betätigungselement (34) über eine Verzahnung, eine Schneckenverzahnung oder einen Reibschluss mit dem wenigstens einen Klappenelement (20) gekoppelt ist.

4. Kühlergrillanordnung (10, 10') nach einem der Ansprüche 1 bis 3,
**dadurch gekennzeichnet, dass**
ein elektrischer oder pneumatischer Antrieb zum Antreiben des Betätigungselements (34) vorgesehen ist.

5. Kühlergrillanordnung (10, 10') nach einem der vorherigen Ansprüche,
**dadurch gekennzeichnet, dass**
jeder Luftdurchtrittsöffnung (16) genau ein bewegliches Klappenelement (20) zugeordnet ist.

6. Kühlergrillanordnung (10, 10') nach Anspruch 1,
**dadurch gekennzeichnet, dass**
in der Verschlussstellung eine Kante des wenigstens einen beweglichen Klappenelements (20) in eine Nut eines zugeordneten, wenigstens eine Luftdurchtrittsöffnung begrenzenden Steges (12) oder dgl. des Kühlergrills eingreift.

7. Kühlergrillanordnung (10, 10') nach Anspruch 6,
**dadurch gekennzeichnet, dass**
an der Kante und/oder der Nut ein Dichtungselement vorgesehen ist.

8. Kühlergrillanordnung (10, 10') nach Anspruch 6 oder 7,
**dadurch gekennzeichnet, dass**
die Kante und die Nut eine Labyrinthdichtung ausbilden.

## Claims

1. Radiator grille arrangement (10, 10') for a front end of a motor vehicle, comprising a radiator grille having a plurality of air passage openings (16) and further comprising at least one damper element (20) of a damper arrangement by means of which one or more air passage openings (16) can be closed, wherein the at least one damper element (20) is mounted for pivoting about an associated damper axis (24) and can be pivoted between a closing position, in which it blocks at least one associated air passage opening (16) bounded by webs (12) placed immediately opposite one another, and an opening position, in which it completely unblocks the at least one associated air passage opening (16), wherein the at least one damper element (20) comprises a closing surface (30), which covers the associated air passage opening (16) in the closing position, and a base part, wherein the axis of rotation (24) of the at least one damper element is located in the region of the base part (26), and wherein an operating element (34) coupled to an end region (33) of the at least one damper element (20) is provided, the operating element (34) being coupled to an end region of the base part (26).

2. Radiator grille arrangement (10, 10') according to claim 1,
**characterised in that**
the operating element (34) is designed as a push rod or torsion bar.

3. Radiator grille arrangement (10, 10') according to claim 1,
**characterised in that**
the operating element (34) is coupled to the at least one damper element (20) via a toothing arrangement, a worm gear or a frictional contact.

4. Radiator grille arrangement (10, 10') according to any of claims 1 to 3,
**characterised in that**
an electric or pneumatic drive is provided for driving the operating element (34).

5. Radiator grille arrangement (10, 10') according to any of the preceding claims,
**characterised in that**
precisely one movable damper element (20) is assigned to each air passage opening (16).

6. Radiator grille arrangement (10, 10') according to claim 1,
**characterised in that**
in the closing position an edge of the at least one movable damper element (20) engages with a groove of an associated web (12) or the like of the radiator grille, which bounds at least one air passage opening.

7. Radiator grille arrangement (10, 10') according to claim 6,
**characterised in that**
a sealing element is provided on the edge and/or on the groove.

8. Radiator grille arrangement (10, 10') according to claim 6 or 7,
**characterised in that**
the edge and the groove form a labyrinth seal.

## Revendications

1. Ensemble de grille de refroidissement (10, 10') pour un palonnier d'un véhicule à moteur, comprenant une grille de refroidissement qui comporte une pluralité d'orifices de passage d'air (16) et un élément de volet (20) d'un ensemble de volet, au moyen duquel un ou plusieurs orifices de passage d'air (16) peuvent au moins sensiblement être obturés, ledit au moins un élément volet (20) étant monté pivotant autour d'un axe (24) de volet associé et pouvant pivoter entre une position de fermeture, dans laquelle il ferme au moins un orifice de passage d'air (16) associé, au moyen d'entretoises se faisant face directement (12), et une position d'ouverture dans laquelle il libère complètement l'au moins un orifice de passage d'air (16) associé, l'au moins un élément de clapet (20) comprend une surface de fermeture (30), laquelle recouvre dans la position de fermeture l'orifice de passage d'air (16) associé, et une partie de base, l'axe de rotation (24) de l'au moins un élément de clapet étant disposé dans la région de la partie de base (26) et un élément d'actionnement (34) étant couplé à une zone d'extrémité (33) de l'au moins un élément de clapet (26), l'élément d'actionnement (34) étant couplé à une zone d'extrémité de la partie de base (26).

2. Ensemble de grille de refroidissement (10, 10'), **caractérisé en ce que** l'élément d'actionnement (34) est conçu en tant que bielle ou barre de torsion.

3. Ensemble de grille de refroidissement (10, 10') selon la revendication 1, **caractérisé en ce que** l'élément d'actionnement (34) est couplé au moyen d'une denture, d'une denture hélicoïdale ou un élément de friction à l'au moins un élément de clapet (20).

4. Ensemble de grille de refroidissement (10, 10' selon l'une quelconque des revendications 1 à 3, **caractérisé en ce qu'**un entraînement pneumatique ou électrique sert à entraîner l'élément d'actionnement (34).

5. Ensemble de grille de refroidissement (10, 10') selon l'une quelconque des revendications précédentes, **caractérisé en ce que** chaque orifice de passage d'air (16) est associé exactement à un élément de clapet (20) mobile.

6. Ensemble de grille de refroidissement (10,10') selon la revendication 1, **caractérisé en ce que** dans la position de fermeture une arête de l'au moins un élément de clapet (20) mobile s'engage dans une rainure d'une entretoise (12) définissant au moins un orifice de passage d'air (16) associé ou similaire de la grille de refroidissement.

7. Ensemble de grille de refroidissement (10, 10') selon la revendication 6, **caractérisé en ce que** sur l'arête et/ou sur la rainure est disposé un élément d'étanchéité.

8. Ensemble de grille de refroidissement (10, 10') selon les revendications 6 ou 7, **caractérisé en ce que** l'arête et la rainure forment un joint d'étanchéité à labyrinthe.
